# EUROPÄISCHE PATENTSCHRIFT

(11) **EP 2 600 018 B1**
(45) Veröffentlichungstag und Bekanntmachung des Hinweises auf die Patenterteilung: **28.08.2019**
(21) Anmeldenummer: 12007969.4
(22) Anmeldetag: 27.11.2012
(51) Int. Cl.: F16D 3/62, F16D 3/78, B29C 45/00

(54) **Elastischer Gelenkkörper**
Elastic joint body
Corps d'articulation élastique

(30) Priorität: 02.12.2011 DE 202011108594 U
(43) Veröffentlichungstag der Anmeldung: 05.06.2013
(73) Patentinhaber: Süddeutsche Gelenkscheibenfabrik GmbH & Co. KG, 84478 Waldkraiburg (DE)
(72) Erfinder: Memel, Karl-Heinz, 84453 Mühldorf (DE); Hingerl, Anton, 84453 Mühldorf (DE); Nindel, Wolfgang, 84453 Mühldorf (DE); Tietze, Jürgen, 84478 Waldkraiburg (DE)
(74) Vertreter: Thum, Bernhard

(56) Entgegenhaltungen:
- DE-A1- 4 243 447
- DE-A1-102008 022 475
- JP-A- H0 495 614
- JP-A- H1 047 366

## Beschreibung

Die vorliegende Erfindung betrifft einen elastischen Gelenkkörper für eine Wellenanordnung zum gelenkigen Verbinden zweier Wellenabschnitte, mit einer Mehrzahl von Buchsen, die in Umfangsrichtung in vorbestimmten Winkelabständen bezüglich einer Mittelachse des Gelenkkörpers angeordnet sind, und einer Mehrzahl von Schlingenpaketen, wobei jedes der Schlingenpakete jeweils zwei benachbarte Buchsen umschlingt. Die Buchsen und Schlingenpakete sind derart angeordnet, dass in dem Gelenkkörper eine sich in Richtung der Mittelachse des Gelenkkörpers durch den Gelenkkörper erstreckende, zentrale Öffnung ausgebildet wird.

Derartige Gelenkkörper, häufig auch als "Gelenkscheiben" bezeichnet, sind aus dem Stand der Technik bekannt und beispielsweise in dem Dokument DE 27 05 598 A1 offenbart. Der in diesem Dokument offenbarte Gelenkkörper umfasst in regelmäßigen Winkelabständen um die Gelenkkörperachse angeordnete Buchsen, die jeweils paarweise von Fadenwickeln umschlungen sind. Die Buchsen und die Fadenwickel sind zusammen in einem elastomeren Werkstoff eingebettet. Auch die Bereiche zwischen den einzelnen Außenbuchsen sind mit dem elastomeren Werkstoff ausgefüllt, in dem die Fadenwickel eingebettet sind.

JP H04 95614 A offenbart ein Gusswerkzeug mit einem oberen Formteil, einem unteren Formteil und einem ringförmigen Formteil. Die Formteile sind in einem Aufnahmeabschnitt aufgenommen. In dem ringförmigen Formteil ist ein Angussabschnitt ausgebildet, der mit dem Angusskanal in dem Aufnahmeabschnitt verbunden ist. Mit dem Angussabschnitt und dem Angusskanal wird ein Punkt-Anguss mit einer punktförmige Angussstelle gebildet.

JP H10 47366 A offenbart, dass unvulkanisiertes Gummimaterial in eine Gussform eingespritzt und im Anschluss daran vulkanisiert wird. Dieses Dokument offenbart die Merkmale des Oberbegriffes des Anspruchs 1.

Die aus dem Stand der Technik bekannten Gelenkkörper weisen an ihren sich senkrecht zur Mittelachse des Gelenkkörpers erstreckenden Flächen, d.h. den axialen Flächen des Gelenkkörpers Angussmerkmale auf, die von einem Punkt- oder Stranganguss herrühren. Ausgehend von diesen Angussstellen an den axialen Flächen des Gelenkkörpers sind die Fadenwickel und die Außenbuchsen mit dem elastomeren Werkstoff ummantelt. Durch die Ummantelung aus Richtung der Mittelachse des Gelenkkörpers kommt der elastomere Werkstoff direkt mit den Fadenwickeln in Kontakt, wodurch das Fließ-bzw. Ausbreitungsverhalten des elastomeren Werkstoffs beeinflusst wird. Aufgrund dieser Einflüsse kann es in Einzelfällen zu einer fehlerhaften Ausgestaltung der elastomeren Ummantelung bzw. des elastischen Körpers des Gelenkkörpers und zu unerwünschten Lufteinschlüssen in der elastomeren Ummantelung kommen. Da die elastomere Ummantelung der Buchsen und der Fadenwickel für die Funktion, unter anderem dem Ausgleich von Winkelversätzen zwischen Wellenabschnitten, und die Lebensdauer des Gelenkkörpers von großer Bedeutung ist, können sowohl eine fehlerhaft ausgebildete elastomere Ummantelung als auch vermehrte Lufteinschlüsse in dem Elastomerkörper zur Verringerung der Lebensdauer sowie zur Beeinträchtigung der Funktion des Gelenkkörpers führen.

Es ist eine Aufgabe der vorliegenden Erfindung einen Gelenkkörper der eingangs bezeichneten Art bereitzustellen, bei dem die Lebensdauer erhöht und die Funktion des Gelenkkörpers sichergestellt werden kann.

Diese Aufgabe wird mit einem elastischen Gelenkkörper mit den Merkmalen des Schutzanspruchs 1 gelöst. Bevorzugte Ausführungsformen ergeben sich aus den beigefügten abhängigen Schutzansprüchen.

Zu Lösung der vorstehenden Aufgabe weist der erfindungsgemäße Gelenkkörper an wenigstens einer sich in axialer Richtung erstreckenden Umfangsfläche wenigstens einen Angusssteg auf. Ausgehend von dem wenigstens einen Angusssteg sind die Buchsen und die Schlingenpakete zumindest teilweise mit einer gummielastischen Ummantelung ummantelt.

Durch den wenigstens einen Angusssteg an wenigstens einer sich in axialer Richtung des Gelenkkörpers erstreckenden Umfangsfläche wird eine gleichförmigere und zuverlässigere Ausbildung der gummielastischen Ummantelung gewährleistet. Mit dem wenigstens einen Angusssteg kann dem Einfluss der Schlingenpakete und Buchsen bei der Bildung der gummielastischen Ummantelung besser Rechnung getragen werden. Zudem kann dadurch das Auftreten von Lufteinschlüssen in der gummielastischen Ummantelung reduziert werden.

Die gleichförmig und vollständig ausgebildete gummielastische Ummantelung des Gelenkkörpers führt zu einer erhöhten Lebensdauer des Gelenkkörpers und trägt zur Sicherstellung einer dauerhaft zufriedenstellenden Funktion des Gelenkkörpers bei.

Der wenigstens eine Angusssteg kann sich gemäß einer Ausführungsform der Erfindung in Richtung der Mittelachse des Gelenkkörpers erstrecken.

Ferner kann sich der wenigstens eine Angusssteg gemäß einer weiteren Ausführungsform der Erfindung in Umfangsrichtung des Gelenkkörpers erstrecken.

Die beiden vorstehend beschriebenen Ausführungsformen stellen nicht zwingend Alternativen zueinander dar, sondern können auch kombiniert werden. Dementsprechend kann der erfindungsgemäße Gelenkkörper sowohl wenigstens einen Angusssteg, der sich in axialer Richtung erstreckt, als auch wenigstens einen Angusssteg aufweisen, der in Umfangsrichtung an den Umfangsflächen des Gelenkkörpers verläuft.

Der wenigstens eine Angusssteg kann gemäß einer Weiterbildung der Erfindung wenigstens einer Umfangsflächen des Gelenkkörpers vollständig umgeben. Anders ausgedrückt, kann der Gelenkkörper an wenigstens einer Umfangsfläche einen umlaufenden Angusssteg umfassen.

Gemäß einer Ausführungsform der Erfindung kann sich eine Mehrzahl von Angusstegen in Umfangsrichtung des Gelenkkörpers an wenigstens einer seiner Umfangsflächen erstrecken. Jeder Angusssteg der Mehrzahl der Angussstege kann dabei auch nur einen Teilbereich wenigstens einer Umfangsflächen des Gelenkkörpers überspannen.

Die einzelnen Angussstege der Mehrzahl der Angussstege können ferner in axialer Richtung zueinander versetzt sein.

Gemäß einer Ausführungsform der Erfindung kann der wenigstens eine Angusssteg im Bereich der zentralen Öffnung an einer Innenumfangsfläche vorgesehen sein. Mit der vorbestimmt ausgebildeten und dimensionierten, zentralen Öffnung kann der wenigstens eine axiale Angusssteg über ein zentrales Angusssystem gebildet werden. Die Schlingenpakete und die Buchsen werden somit ausgehend von dem axialen Angusssteg im Bereich der zentralen Öffnung ummantelt. Als zentrales Angusssystem kann beispielswiese ein Filmangusssystem verwendet werden, bei dem die gummielastische Ummantelung ausgehend von dem sich in axialer Richtung erstreckenden wenigstens einen Angusssteg film- bzw. bandförmig gebildet wird.

Zusätzlich oder alternativ zu dem axialen Angusssteg im Bereich der Innenumfangsfläche der zentralen Öffnung kann wenigstens ein axialer Angusssteg an einer Außenumfangsfläche des Gelenkkörpers vorgesehen sein.

Die vorbestimmt ausgebildete, zentrale Öffnung des Gelenkkörpers kann im Wesentlichen rund oder auch mehreckig (Polygon) ausgebildet sein. Dabei erstreckt sich ihre Innenumfangsfläche in Richtung der Mittelachse des Gelenkkörpers.

Der wenigstens eine sich in Richtung der Mittelachse des Gelenkkörpers erstreckende Angusssteg verläuft im Wesentlichen parallel oder schräg zur Mittelachse des Gelenkkörpers.

Je nach der Gestalt oder Dimensionierung des Gelenkkörpers kann sich der in axialer Richtung erstreckende wenigstens eine Angusssteg über die gesamte axiale Erstreckung des Gelenkkörpers erstrecken oder nur über einen Teil hiervon. Dementsprechend kann die Erstreckung des wenigstens eine Angussstegs in axialer Richtung des Gelenkkörpers kleiner sein als die gesamte Erstreckung des Gelenkkörpers in axialer Richtung. Alternativ dazu kann sich der wenigstens eine Angusssteg über die gesamte axiale Erstreckung des Gelenkkörpers in Richtung der Mittelachse erstrecken.

Gemäß einer Ausführungsform der vorliegenden Erfindung sind wenigstens sechs Angussstege an der Innenumfangsfläche der zentralen Öffnung des Gelenkkörpers vorgesehen. Sämtliche der sechs Angussstege können sich in axialer Richtung des Gelenkkörpers erstrecken. Die wenigstens sechs sich in axialer Richtung des Gelenckörpers erstreckenden Angussstege können um die Mittelachse des Gelenkkörpers in regelmäßigen Winkelabständen zueinander angeordnet sein. Mit anderen Worten, sind die Buchsen und die Schlingenpakete ausgehend von den sechs axialen Angussstegen mit der gummielastischen Ummantelung ummantelt. Die versetzt zu einander angeordneten axialen Angussstege führen zu einer gleichmäßig ausgebildeten gummielastischen Ummantelung, mit einem reduzierten Auftreten von Lufteinschlüssen.

Gemäß einer Ausführungsform der Erfindung wird bei der Bildung des Gelenkköpers eine Mehrzahl von Schlingenpakete und eine Mehrzahl von zwei benachbarte Buchsen umschlingenden Schlingenpakten in einer Spritzgussform angeordnet. Anschließend kann die die gummielastische Ummantelung bildende Elastomermasse ausgehend von der in dem Gelenkkörper auszubildenden zentralen Öffnung in die Spritzgussform derart eingebracht werden, dass an der Innenumfangsfläche der zentralen Öffnung des Gelenkkörpers wenigstens ein sich in axialer Richtung des Gelenkkörpers erstreckender Angusssteg gebildet wird. Ausgehend von dem wenigstens einen axialen Angusssteg werden die Schlingenpakete und die Buchsen zumindest teilweise von der die gummielastische Ummantelung bildenden Elastomermasse ummantelt.

Mit Hilfe des wenigstens einen sich axial erstreckenden Angussstegs können die Buchsen und die Schlingenpakete nahezu über die gesamte axiale Erstreckung des elastischen Gelenkkörpers mit der gummielastischen Ummantelung gleichmäßig ummantelt werden. Ferner kann mit dem wenigstens einen axialen Angusssteg erreicht werden, dass die gummielastische Ummantelung mittels einer Quellströmung gebildet wird und derart die Schlingenpakete und die Buchsen ummantelt. Eine durch den wenigstens einen axialen Angusssteg ermöglichte Quellströmung führt zu einem gleichmäßigeren und damit verbesserten Fließverhalten der Elastomermasse, sodass die gummielastische Ummantelung gleichmäßig und vollständig bei gleichzeitiger Reduzierung des Risikos von Lufteinschlüssen gebildet wird.

Gemäß einer Ausführungsform der Erfindung können jeder Buchse Bundbuchsen zugeordnet werden, die jeweils an den axialen Enden der Buchsen vorgesehen und zumindest teilweise von der gummielastischen Ummantelung ummantelt sind. Die Bundbuchsen dienen unter anderem dazu, die Schlingenpakete in axialer Richtung der Buchsen abzustützen und die Schlingenpakete somit besser an den Buchsen in ihrer vorbestimmten Position zu halten.

Erfindungsgemäß kann vorgesehen sein, dass die gummielastische Ummantelung des Gelenkkörpers jeweils an ihren senkrecht zur Mittelachse des Gelenkkörpers verlaufenden Flächen im Bereich zwischen zwei benachbarten Buchsen wenigstens eine Ausnehmung aufweist. Diese Ausnehmungen an den axialen Flächen des Gelenkkörpers führen dazu, dass sich die gummielastische Ummantelung im Bereich zwischen den Buchsen im Betrieb des Gelenkkörpers, d.h. bei der Drehmomentübertagung, deformieren kann. Ferner können sich die Ausnehmungen auch in einem Bereich zwischen zwei Strängen eines zwei benachbarte Buchsen umschlingenden Schlingenpakets erstrecken.

Die vorliegende Erfindung betrifft ferner eine Wellenanordnung, insbesondere einen Antriebsstrang eines Fahrzeugs mit einem Gelenkkörper der voranstehend beschriebenen Art.

Im folgendem wird eine Ausführungsform der Erfindung mit Bezug auf die beigefügten Figuren erläutert. Es stellen dar:
- Fig. 1: eine perspektivische Ansicht eines Gelenkkörpers gemäß einer ersten Ausführungsform der Erfindung;
- Fig. 2: eine Draufsicht des Gelenkköpers gemäß Fig. 1;
- Fig. 3: eine perspektivische Ansicht eines Gelenkkörpers gemäß einer zweiten Ausführungsform der Erfindung;
- Fig. 4: eine perspektivische Ansicht eines Gelenkkörpers gemäß einer dritten Ausführungsform der Erfindung;
- Fig. 5: eine perspektivische Ansicht eines Gelenkkörpers gemäß einer vierten Ausführungsform der Erfindung;
- Fig. 6: eine perspektivische Ansicht eines Gelenkkörpers gemäß einer fünften Ausführungsform der Erfindung;
- Fig. 7: eine perspektivische Ansicht eines Gelenkkörpers gemäß einer sechsten Ausführungsform der Erfindung; und
- Fig. 8: eine perspektivische Ansicht eines Gelenkkörpers gemäß einer siebten Ausführungsform der Erfindung.

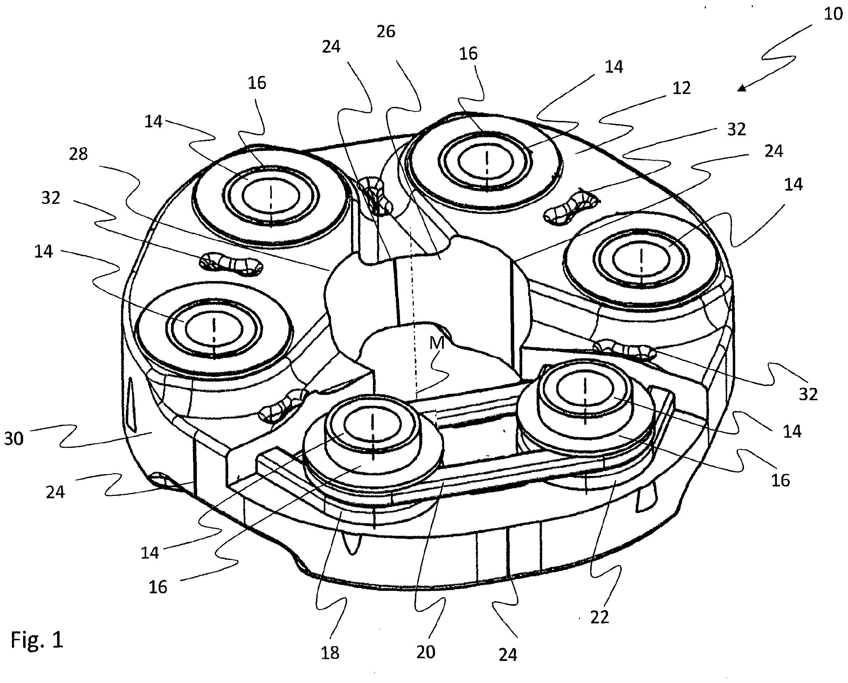

Fig.1 zeigt eine perspektivische Ansicht einer ersten Ausführungsform des erfindungsgemäßen elastischen Gelenkkörpers 10 mit sechs von einer gummielastischen Ummantelung 12 ummantelten Buchsen 14. Die Buchsen 14 sind in Umfangsrichtung bezüglich einer Mittelachse M in vorbestimmten Winkelabständen des Gelenkkörpers 10 angeordnet. In dem in der Zeichnung aufgeschnitten dargestellten Bereich des Gelenkkörpers 10 gemäß Fig. 1 erkennt man die Bundelemente 16 an den Buchsen 14, die zur axialen Abstützung der Schlingenpakete 18, 20 und 22 angeordnet sind. Sowohl die Bundbuchsen 16 als auch die Schlingenpakete 18, 20 und 22 sind von der gummielastischen Ummantelung 12 ummantelt.

Aus Fig. 1 erkennt man zudem, das eine einzelne Buchse 14 jeweils von mehreren Schlingenpaketen 18, 20 bzw. 20, 22 umschlungen ist. Dabei kann vorgesehen sein, dass die Schlingenpakete 18, 22 im in eine Wellenanordnung eingebauten Zustand des Gelenkkörpers 10 durch eine Zugkraft beansprucht werden, während das Schlingenpaket 20 und ein in Fig. 1 nicht gezeigtes von der gummielastischen Ummantelung 12 ummanteltes paralleles weiteres Schlingenpaket auf Druck bzw. Schub belastet werden
Der Gelenkkörper 10 weist zudem sich in Richtung der Mittelachse M erstreckende Angussstege 24 auf. Die axialen Angussstege 24 können an einer Innenumfangsfläche 26 einer zentralen Öffnung 28 in dem Gelenkkörper 10 bzw. der Gelenkscheibe und an einer Außenumfangsfläche 30 des Gelenkkörpers 10 vorgesehen sein. Es ist jedoch für die Konstruktion und Herstellung des Gelenkkörpers 10 ausreichend, wenn die axialen Angussstege 24 entweder an der Innenumfangsfläche 26 der zentralen Öffnung 28 oder Außenumfangsfläche 30 des Gelenkkörpers 10 angeordnet sind. Gemäß dieser Ausführungsform der Erfindung erstrecken sich die Angussstege 24 parallel zur Mittelachse M.

Ausgehend von den Angussstegen 24 sind die Buchsen 14, die Bundbuchsen 16 und die Schlingenpakete 18, 20 und 22 mit der gummielastischen Ummantelung 12 ummantelt.

Gemäß dieser Ausführungsform der Erfindung erstrecken sich die axialen Angussstege 24 über die gesamte axiale Erstreckung des Gelenkkörpers 10. Die Angussstege 24 müssen jedoch nicht zwingend so ausgeführt werden, sondern können sich auch nur über Teilabschnitte der axialen Erstreckung des Gelenkkörpers 10 erstrecken.

Der Gelenkkörper 10 weist im Bereich zwischen den Buchsen 14 ferner Ausnehmungen 32 auf. Die Ausnehmungen 32 dienen dazu, dass sich der Gelenkkörper 10 bzw. die gummielastische Ummantelung 12 im Betrieb, d.h. bei der Drehmomentübertragung zwischen zwei Wellenabschnitten (nicht gezeigt) deformieren kann. Anders ausgedrückt, lassen die Ausnehmungen 32 im Betrieb des Gelenkkörpers 10 eine Annäherung einzelner Buchsen 14 aneinander zu.

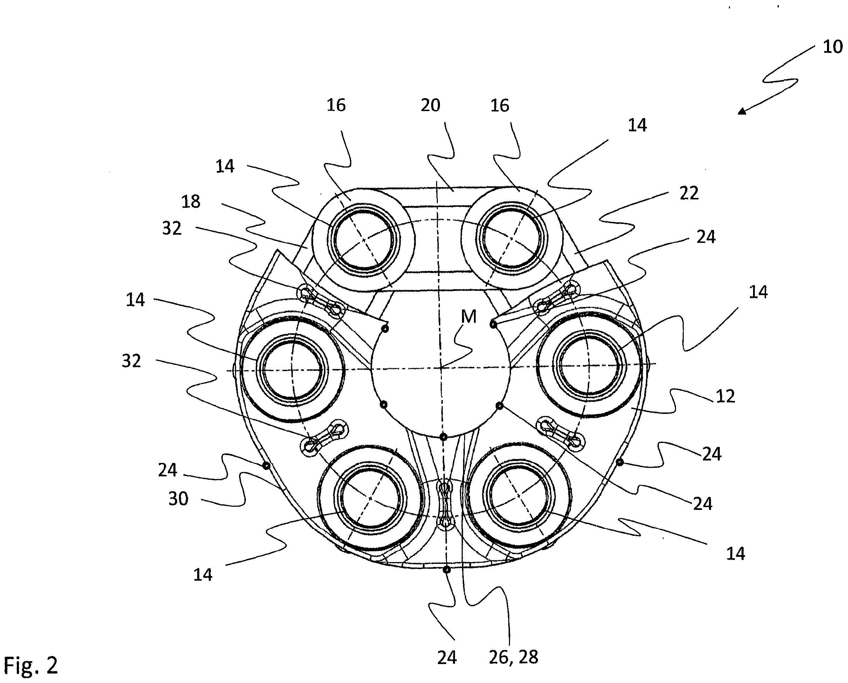

Fig. 2 zeigt eine teilweise aufgebrochene Draufsicht des elastischen Gelenkkörpers 10 gemäß Fig. 1. In dem in der Zeichnung aufgebrochen dargestellten Bereich des Gelenkkörpers 10 sind erneut die Bundelemente 16 an den Buchsen 14 erkennbar, die zur axialen Abstützung der Schlingenpakete 18, 20 und 22 angeordnet sind.

Die Draufsicht gemäß Fig. 2 zeigt ebenfalls die Angussstege 24. Die Angussstege 24 sind wieder um an der Innenumfangsfläche 26 der zentralen Öffnung 28 und der Außenumfangsfläche 30 vorgesehen. Die Angussstege 24 sind in regelmäßigen Winkelabständen um die Mittelachse M angeordnet sind und erstrecken sich in axialer Richtung des Gelenkkörpers 10.

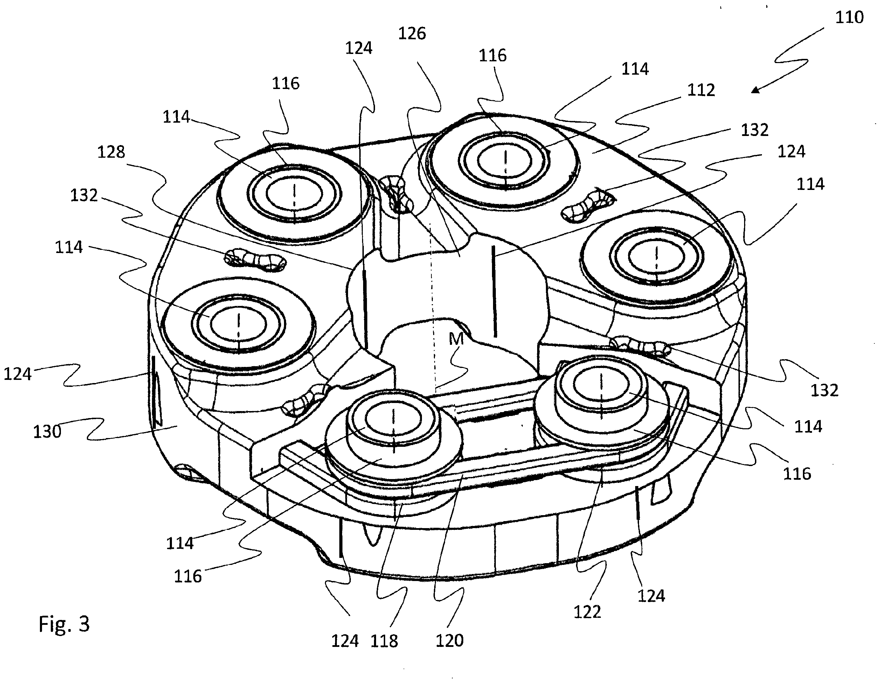

Fig. 3 zeigt eine perspektivische Ansicht eines Gelenkkörpers 110 gemäß einer zweiten Ausführungsform der Erfindung.

Der Gelenkkörper 110 entspricht weitgehend dem mit Bezug auf die Fign. 1 und 2 beschriebenen Gelenkkörper 10, jedoch sind bei dem Gelenkkörper 110 die Angussstege 124 in einer Flucht mit den Achsen der Buchsen 114 angeordnet.

Ferner ist in Figur 3 erkennbar, dass gemäß dieser Ausführungsform die axialen Angussstege 124 nur einen Teilbereich der axialen Erstreckung des Gelenkkörpers 110 überspannen. Die axialen Angussstege 124 reichen dementsprechend nicht bis an die Körperkanten des Gelenkkörpers 110 heran, sondern erstrecken sich in einem mittleren Bereich der axialen Erstreckung des Gelenkkörpers 110.

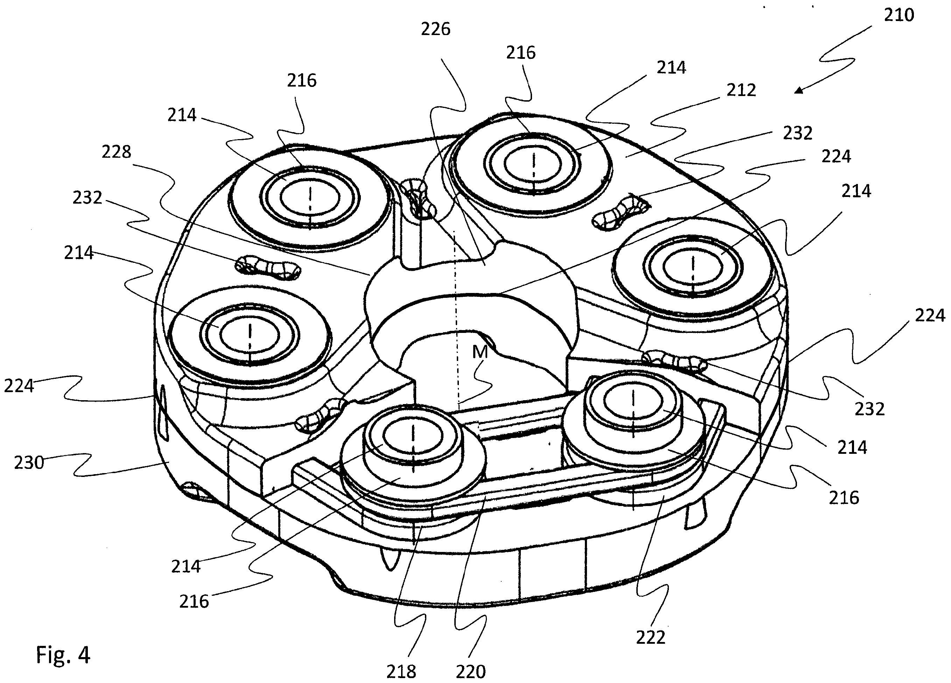

Fig. 4 zeigt eine perspektivische Ansicht eines Gelenkkörpers 210 gemäß einer dritten Ausführungsform der Erfindung.

Die Angussstege 224 des Gelenkkörpers 210 erstrecken sich in Umfangsrichtung des Gelenkkörpers 210. Die Angussstege 224 verlaufen dabei entlang der Innenumfangsfläche 226 der zentralen Öffnung 228 oder entlang der Außenumfangsfläche 230 des Gelenkkörpers 210. Anders ausgedrückt, umlaufen die Angussstege 224 die Innenumfangsfläche 226 und die Außenumfangsfläche 230 vollständig, wobei die Angussstege 224 gemäß dieser Ausführungsform in einem mittleren Bereich der axialen Erstreckung des Gelenkkörpers 210 vorgesehen sind.

Die Angussstege 224 müssen jedoch nicht an der Innenumfangsfläche 226 und an der Außenumfangsfläche 230 angeordnet sein. Es ist ausreichend, wenn die sich in Umfangsrichtung ersteckenden Angussstege 224 entweder an der Innenumfangsfläche 226 der zentralen Öffnung 228 oder an der Außenumfangsfläche 230 des Gelenkkörpers 210 angeordnet sind.

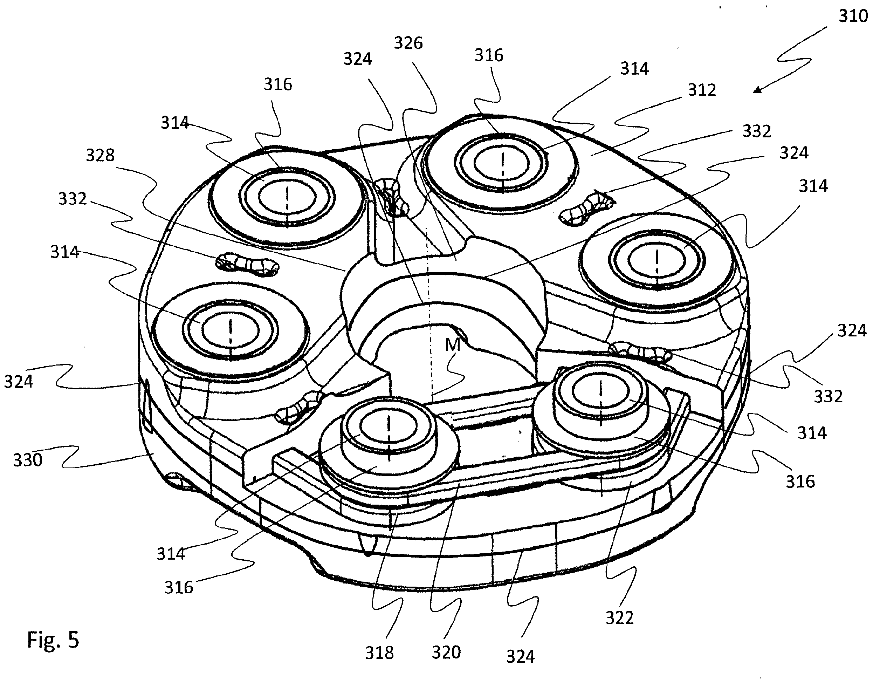

Fig. 5 zeigt eine perspektivische Ansicht eines Gelenkkörpers 310 gemäß einer vierten Ausführungsform der Erfindung.

Der Gelenkkörper 310 umfasst zwei parallel zueinander verlaufende Angussstege 324, die sich in Umfangsrichtung des Gelenkkörpers 310 an der Innenumfangsfläche 326 und der Außenumfangsfläche 330 erstrecken. Die Angussstege 324 umgeben die Innenumfangsfläche 324 und die Außenumfangsfläche 330 vollständig.

Es können natürlich auch mehr als zwei Angussstege 324 an der Innenumfangsfläche 326 und/oder der Außenumfangsfläche 330 vorgesehen sein.

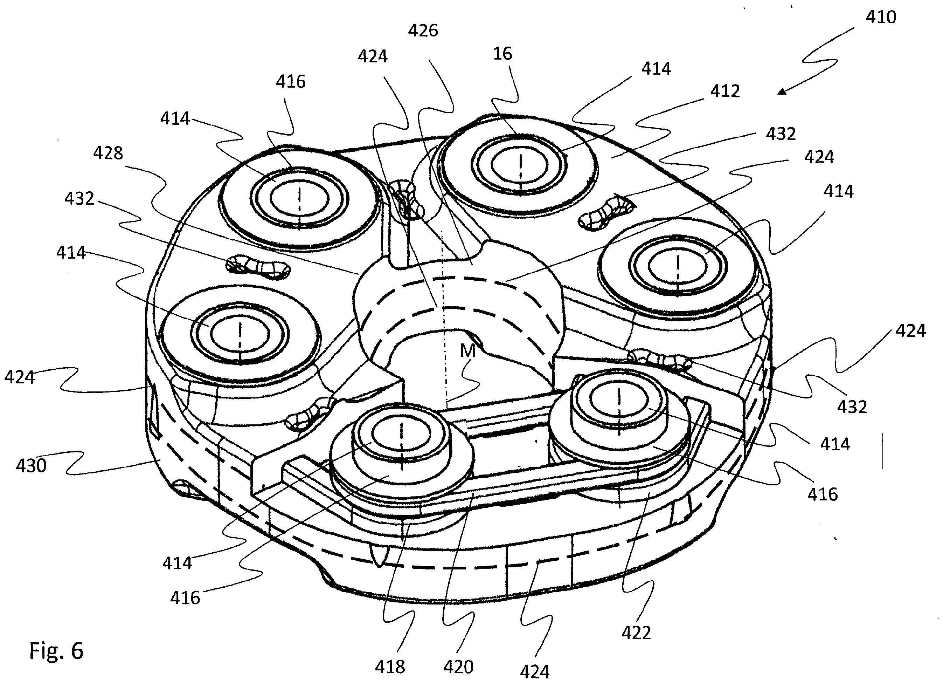

Fig. 6 zeigt eine perspektivische Ansicht eines Gelenkkörpers 410 gemäß einer fünften Ausführungsform der Erfindung.

Der Gelenkkörper 410 umfasst eine Mehrzahl von Angussstegen 424, die sich in Umfangsrichtung des Gelenkkörpers 410 an der Außenumfangsfläche 430 und der Innenumfangsfläche 426 der zentralen Öffnung 428 erstrecken. Jeder der Angussstege 424 überspannt dabei einen Teilbereich der Innenumfangsfläche 426 oder der Außenumfangsfläche 430 des Gelenkkörpers 410.

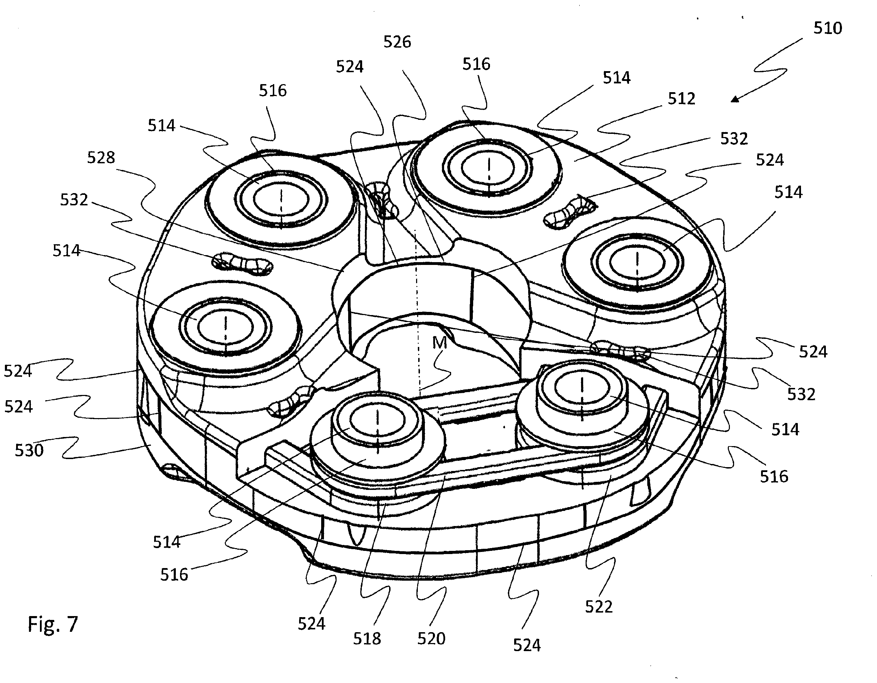

Fig. 7 zeigt eine perspektivische Ansicht eines Gelenkkörpers 510 gemäß einer sechsten Ausführungsform der Erfindung.

Der Gelenkkörper 510 weist sowohl sich in axialer Richtung erstreckende Angussstege 524 als auch in Umfangsrichtung des Gelenkkörpers 510 entlang der Außenumfangsfläche 530 und der Innenumfangsfläche 526 verlaufende Angussstege 524 auf. Es kann dabei vorgesehen sein, dass sich die axialen Angussstege 524 zwischen den sich in Umfangsrichtung des Gelenkkörpers 510 verlaufenden Angussstege 524 erstrecken. Dies ist jedoch nicht zwingend.

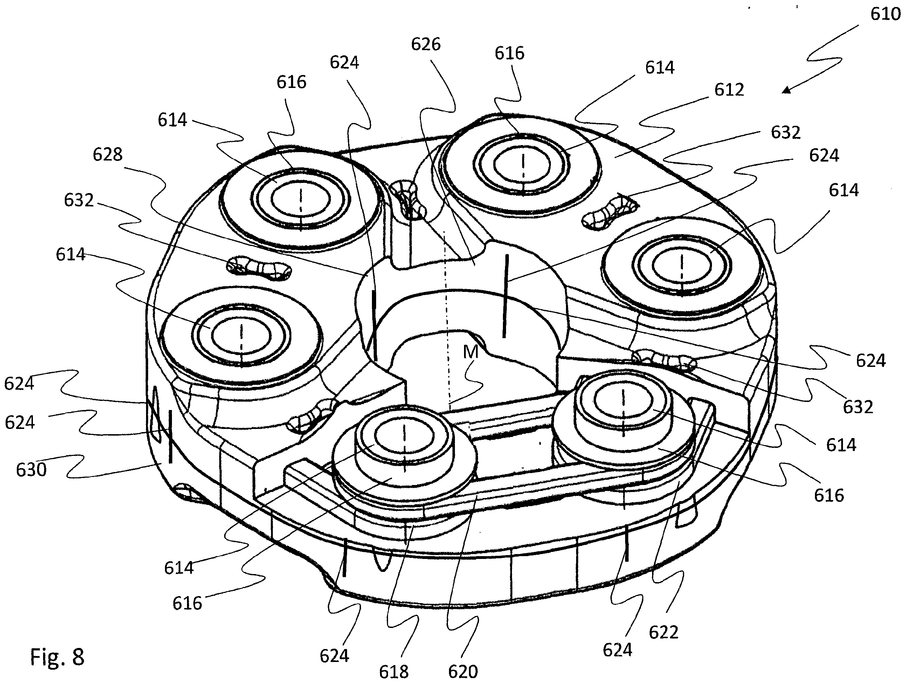

Fig. 8 zeigt eine perspektivische Ansicht eines Gelenkkörpers 610 gemäß einer siebten Ausführungsform der Erfindung.

Der Gelenkkörper 610 gemäß Figur 8 weist einen sich in Umfangsrichtung des Gelenkkörpers 610, d. h. äquatorial, erstreckenden Angusssteg 624 jeweils an der Innenumfangsfläche 626 und der Außenumfangsfläche 630 auf. Die sich in Umfangsrichtung erstreckenden, Angussstege 624 sind in wesentlichen mittig an der Innenumfangsfläche 626 und der Außenumfangsfläche 630 angeordnet und "schneiden" somit die sich in axialer Richtung erstreckenden Angussstege 624.

Sämtliche der vorstehend beschriebenen Ausführungsformen können miteinander kombiniert werden.

Auch wenn bei den vorstehend beschriebenen Ausführungsformen jeweils Angussstege an der Innenumfangsfläche und der Außenumfangsfläche des Gelenkkörpers vorgesehen waren, ist es für die Konstruktion und Herstellung des Gelenkkörpers ausreichend, wenn die axialen Angussstege entweder an der Innenumfangsfläche oder an der Außenumfangsfläche des Gelenkkörpers angeordnet sind.

## Patentansprüche

1. Elastischer Gelenkkörper (10) für eine Wellenanordnung zum gelenkigen Verbinden zweier Wellenabschnitte, mit
- einer Mehrzahl von Buchsen (14), die in Umfangsrichtung in vorbestimmten Winkelabständen bezüglich einer Mittelachse (M) des Gelenkkörpers (10) angeordnet sind, und
- einer Mehrzahl von Schlingenpaketen (18, 20, 22), von denen jedes jeweils zwei benachbarte Buchsen (14) umschlingt, wobei die Buchsen (14) und die Schlingenpakete (18, 20, 22) derart angeordnet sind, dass in dem Gelenkkörper (10) eine sich in Richtung der Mittelachse (M) des Gelenkkörpers (10) durch den Gelenkkörper (10) erstreckende, zentrale Öffnung (28) gebildet wird,
**dadurch gekennzeichnet, dass** der elastische Gelenkkörper (10) an wenigstens einer sich in axialer Richtung erstreckenden Umfangsfläche (26, 30) wenigstens einen Angusssteg (24) aufweist, wobei die Buchsen (14) und die Schlingenpakete (18, 20, 22) ausgehend von dem wenigstens einen Angusssteg (24) zumindest teilweise mit einer gummielastischen Ummantelung (12) ummantelt sind.

2. Gelenkkörper (10) nach Anspruch 1,
**dadurch gekennzeichnet, dass** sich der wenigstens eine Angusssteg (24) in Richtung der Mittelachse (M) des Gelenkkörpers (10) erstreckt.

3. Gelenkkörper (210) nach Anspruch 1 oder 2,
**dadurch gekennzeichnet, dass** sich der wenigstens eine Angusssteg (224) in Umfangsrichtung des Gelenkkörpers (210) erstreckt.

4. Gelenkkörper (210) nach Anspruch 3,
**dadurch gekennzeichnet, dass** der wenigstens eine Angusssteg (224) wenigstens eine der Umfangsflächen (226, 230) des Gelenkkörpers (210) vollständig umgibt.

5. Gelenkkörper (410) nach Anspruch 3 oder 4,
**dadurch gekennzeichnet, dass** eine Mehrzahl von Angussstegen (424) sich in Umfangsrichtung des Gelenkkörpers (410) an wenigstens einer seiner Umfangsflächen (426, 430) erstreckt, wobei jeder Angusssteg (424) der Mehrzahl der Angussstege (424) einen Teilbereich wenigstens einer der Umfangsflächen (426, 430) des Gelenckörpers (410) überspannt.

6. Gelenkkörper (410) nach Anspruch 5,
**dadurch gekennzeichnet, dass** die Angussstege (424) der Mehrzahl der Angussstege (424) in axialer Richtung zueinander versetzt sind.

7. Gelenkkörper (10) nach einem der Ansprüche 1 bis 6,
**dadurch gekennzeichnet, dass** der wenigstens eine Angusssteg (24) im Bereich der zentralen Öffnung (28) an einer Innenumfangsfläche (26) angeordnet ist, oder/und dass der wenigstens eine Angusssteg (24) an einer Außenumfangsfläche (30) des Gelenkkörpers (10) angeordnet ist.

8. Gelenkkörper (10) nach einem der Ansprüche 1 bis 7,
**dadurch gekennzeichnet, dass** die zentrale Öffnung (28) im Wesentlichen rund oder mehreckig ausgebildet ist und sich die Innenumfangsfläche (26) in Richtung der Mittelachse (M) des Gelenkkörpers (10) erstreckt.

9. Gelenkköper (10) nach einem der Ansprüche 1 oder 2,
**dadurch gekennzeichnet, dass** der wenigstens eine Angusssteg (24) sich im Wesentlichen parallel oder schräg zur Mittelachse (M) des Gelenkköpers (10) erstreckt.

10. Gelenkkörper (10) nach einem der Ansprüche 1 bis 9,
**dadurch gekennzeichnet, dass** die Erstreckung des wenigstens einen Angussstegs (24) in axialer Richtung des Gelenkkörpers (10) kleiner ist als die gesamte Erstreckung des Gelenkkörpers (10) in axialer Richtung, oder dass der wenigstens eine Angusssteg (24) sich über die gesamte axiale Erstreckung des Gelenkkörpers (10) erstreckt.

11. Gelenkkörper (10) nach einem der Ansprüche 1 bis 10,
**dadurch gekennzeichnet, dass** wenigstens sechs Angussstege (24) an der Innenumfangsfläche (26) der zentralen Öffnung (28) des Gelenkkörpers vorgesehen (10) sind und sich in axialer Richtung des Gelenkkörpers (10) erstrecken, wobei die wenigstens sechs Angussstege (24) um einen vorbestimmten Winkel um die Mittelachse (M) des Gelenkkörpers (10) zueinander versetzt sind.

12. Gelenkkörper (10) nach einem der Ansprüche 1 bis 11,
**dadurch gekennzeichnet, dass** der Gelenkkörper (10) gebildet ist durch Anordnen einer Mehrzahl von Buchsen (14) und einer Mehrzahl von zwei benachbarten Buchsen umschlingenden Schlingenpaketen (18, 20, 22) in einer Spritzgussform, wobei eine die gummielastische Ummantelung (12) bildende Elastomermasse derart in die Spritzgussform einbringbar ist, dass an einer der beiden sich in Richtung der Mittelachse (M) des Gelenkkörpers (10) erstreckenden Umfangsflächen (26, 30) des Gelenkkörpers (10) wenigstens ein Angusssteg (24) gebildet wird, wobei die Schlingenpakete (18, 20, 22) und die Buchsen (14) ausgehend von dem wenigstens einen Angusssteg (14) zumindest teilweise von der die gummielastische Ummantelung (12) bildenden Elastomermasse ummantelbar sind.

13. Gelenkköper (10) nach einem der Ansprüche 1 bis 12,
**dadurch gekennzeichnet, dass** jeder Buchse (14) Bundelemente (16) zugeordnet sind, die jeweils an den axialen Enden der Buchsen (14) vorgesehen und zumindest teilweise von der gummielastischen Ummantelung (12) ummantelt sind.

14. Gelenkkörper (10) nach einem der Ansprüche 1 bis 13,
**dadurch gekennzeichnet, dass** die gummielastische Ummantelung (12) des Gelenckörpers (10) jeweils an ihren senkrecht zur Mittelachse (M) des Gelenkkörpers (10) verlaufenden Flächen im Bereich zwischen zwei benachbarten Buchsen (14) wenigstens eine Ausnehmung (32) aufweist.

15. Wellenanordnung, insbesondere ein Antriebstrang eines Fahrzeugs, mit einem Gelenkkörper (10) nach einem der Ansprüche 1 bis 14.

## Claims

1. An elastic joint body (10) for a shaft arrangement for the articulated connection of two shaft sections, said joint body having
- a plurality of bushes (14) which are arranged at predetermined angular intervals in the peripheral direction with respect to a central axis (M) of the joint body (10), and
- a plurality of loop packets (18, 20, 22), each loop packet wrapping around two adjacent bushes (14), wherein the bushes (14) and the loop packets (18, 20, 22) are arranged in such a way that a central aperture (28) which extends through the joint body (10) in the direction of the central axis (M) of the latter is formed in said joint body (10),
**characterized in that** the elastic joint body (10) has at least one gate land (24) on at least one peripheral face (26, 30) that extends in the axial direction, wherein the bushes (14) and the loop packets (18, 20, 22) are sheathed, at least partially, with a rubbery-elastic sheathing (12), starting from the at least one gate land (24).

2. The joint body (10) according to claim 1,
**characterized in that** the at least one gate land (24) extends in the direction of the central axis (M) of the joint body (10).

3. The joint body (210) according to claim 1 or 2,
**characterized in that** the at least one gate land (224) extends in the peripheral direction of the joint body (210).

4. The joint body (210) according to claim 3,
**characterized in that** the at least one gate land (224) completely surrounds at least one of the peripheral faces (226, 230) of the joint body (210).

5. The joint body (410) according to claim 3 or 4,
**characterized in that** a plurality of gate lands (424) extends in the peripheral direction of the joint body (410) on at least one of its peripheral faces (426, 430), wherein each gate land (424) of the plurality of gate lands (424) spans a partial region of at least one of the peripheral faces (426, 430) of the joint body (410).

6. The joint body (410) according to claim 5,
**characterized in that** the gate lands (424) of the plurality of gate lands (424) are offset in relation to one another in the axial direction.

7. The joint body (10) according to one of claims 1 to 6,
**characterized in that** the at least one gate land (24) is arranged in the region of the central aperture (28) on an inner peripheral face (26), and/or that the at least one gate land (24) is arranged on an outer peripheral face (30) of the joint body (10).

8. The joint body (10) according to one of claims 1 to 7,
**characterized in that** the central aperture (28) is essentially circular or polygonal, and the inner peripheral face (26) extends in the direction of the central axis (M) of the joint body (10).

9. The joint body (10) according to one of claims 1 or 2,
**characterized in that** the at least one gate land (24) extends substantially parallel or obliquely to the central axis (M) of the joint body (10).

10. The joint body (10) according to one of claims 1 to 9,
**characterized in that** the extension of the at least one gate land (24) in the axial direction of the joint body (10) is smaller than the entire extension of said joint body (10) in the axial direction, or that the at least one gate land (24) extends over the entire axial extension of the joint body (10).

11. The joint body (10) according to one of claims 1 to 10,
**characterized in that** at least six gate lands (24) are provided on the inner peripheral face (26) of the central aperture (28) of the joint body (10) and extend in the axial direction of said joint body (10), wherein the at least six gate lands (24) are offset in relation to one another by a predetermined angle around the central axis (M) of the joint body (10).

12. The joint body (10) according to one of claims 1 to 11,
**characterized in that** the joint body (10) is formed by arranging a plurality of bushes (14) and a plurality of loop packets (18, 20, 22) that wrap around two adjacent bushes, in an injection mold, wherein an elastomer composition that forms the rubbery-elastic sheathing (12) can be introduced into the injection mold in such a way that at least one gate land (24) is formed on one of the two inner peripheral faces (26, 30) of the joint body (10) that extend in the direction of the central axis (M) of said joint body (10), wherein the loop packets (18, 20, 22) and the bushes (14), starting from the at least one gate land (24), can be sheathed at least partially by the elastomer composition that forms the rubbery-elastic sheathing (12).

13. The joint body (10) according to one of claims 1 to 12,
**characterized in that** there are associated with each bush (14) flange elements (16) which are provided at each of the axial ends of the bushes (14) and which are sheathed, at least partially, by the rubbery-elastic sheathing (12).

14. The joint body (10) according to one of claims 1 to 13,
**characterized in that** the rubbery-elastic sheathing (12) of the joint body (10) has, on each of its faces that run perpendicularly to the central axis (M) of the joint body (10), at least one clearance (32) in the region between two adjacent bushes (14).

15. A shaft arrangement, in particular a drive train of a vehicle, having a joint body (10) according to one of claims 1 to 14.

## Revendications

1. Corps d'articulation élastique (10) pour un agencement d'arbres destiné à relier de manière articulée de deux sections d'arbre, comportant
- une pluralité de douilles (14) disposées dans la direction circonférentielle à des distances angulaires prédéterminées par rapport à un axe médian (M) du corps d'articulation (10) et
- une pluralité de paquets de boucles (18, 20, 22), dont chacun enlace chaque fois deux douilles adjacentes (14), les douilles (14) et les paquets de boucles (18, 20, 22) étant disposés de telle sorte qu'une ouverture centrale (28) s'étendant à travers le corps d'articulation (10) dans la direction de l'axe médian (M) du corps d'articulation (10) est formée dans le corps d'articulation (10),
**caractérisé en ce que** le corps d'articulation élastique (10) présente au moins une attaque de coulée (24) sur au moins une surface circonférentielle (26, 30) s'étendant dans la direction axiale, les douilles (14) et les paquets de boucles (18, 20, 22) étant enrobés au moins partiellement d'un enrobage en caoutchouc élastique (12) à partir de ladite au moins une attaque de coulée (24).

2. Corps d'articulation (10) selon la revendication 1,
**caractérisé en ce que** ladite au moins une attaque de coulée (24) s'étend dans la direction de l'axe médian (M) du corps d'articulation (10).

3. Corps d'articulation (210) selon la revendication 1 ou 2,
**caractérisé en ce que** ladite au moins une attaque de coulée (224) s'étend dans la direction circonférentielle du corps d'articulation (210).

4. Corps d'articulation (210) selon la revendication 3,
**caractérisé en ce que** ladite au moins une attaque de coulée (224) entoure complètement au moins une des surfaces circonférentielles (226, 230) du corps d'articulation (210).

5. Corps d'articulation (410) selon la revendication 3 ou 4,
**caractérisé en ce qu'**une pluralité d'attaques de coulée (424) s'étendent dans la direction circonférentielle du corps d'articulation (410) sur au moins une de ses surfaces circonférentielles (426, 430), chaque attaque de coulée (424) de la pluralité d'attaques de coulée (424) couvrant une zone partielle d'au moins une des surfaces circonférentielles (426, 430) du corps d'articulation (410).

6. Corps d'articulation (410) selon la revendication 5,
**caractérisé en ce que** les attaques de coulée (424) de la pluralité d'attaques de coulée (424) sont décalées les unes par rapport aux autres dans la direction axiale.

7. Corps d'articulation (10) selon l'une des revendications 1 à 6,
**caractérisé en ce que** ladite au moins une attaque de coulée (24) est disposée dans la zone de l'ouverture centrale (28) sur une surface circonférentielle intérieure (26) ou/et **en ce que** ladite au moins une attaque de coulée (24) est disposée sur une surface circonférentielle extérieure (30) du corps d'articulation (10).

8. Corps d'articulation (10) selon l'une des revendications 1 à 7,
**caractérisé en ce que** l'ouverture centrale (28) est sensiblement ronde ou polygonale et la surface circonférentielle intérieure (26) s'étend dans la direction de l'axe médian (M) du corps d'articulation (10).

9. Corps d'articulation (10) selon l'une des revendications 1 ou 2,
**caractérisé en ce que** ladite au moins une attaque de coulée (24) s'étend sensiblement parallèlement ou obliquement à l'axe médian (M) du corps d'articulation (10).

10. Corps d'articulation (10) selon l'une des revendications 1 à 9,
**caractérisé en ce que** l'étendue de ladite au moins une attaque de coulée (24) dans la direction axiale du corps d'articulation (10) est plus petite que l'étendue totale du corps d'articulation (10) dans la direction axiale, ou **en ce que** ladite au moins une attaque de coulée (24) s'étend sur l'étendue axiale totale du corps d'articulation (10).

11. Corps d'articulation (10) selon l'une des revendications 1 à 10,
**caractérisé en ce qu'**au moins six attaques de coulée (24) sont prévues sur la surface circonférentielle intérieure (26) de l'ouverture centrale (28) du corps d'articulation, qui s'étendent dans la direction axiale du corps d'articulation (10), lesdites au moins six attaques de coulée (24) étant décalées les unes par rapport aux autres d'un angle prédéterminé autour de l'axe médian (M) du corps d'articulation (10).

12. Corps d'articulation (10) selon l'une des revendications 1 à 11,
**caractérisé en ce que** le corps d'articulation (10) est formé en disposant une pluralité de douilles (14) et une pluralité de paquets de boucles (18, 20, 22) enlaçant deux douilles adjacentes dans un moule d'injection, une masse élastomère formant l'enrobage en caoutchouc élastique (12) pouvant être introduite dans le moule d'injection de telle sorte qu'au moins une attaque de coulée (24) soit formée sur l'une des deux surfaces circonférentielles (26, 30) du corps d'articulation (10) qui s'étendent dans la direction de l'axe médian (M) du corps d'articulation (10), les paquets de boucles (18, 20, 22) et les douilles (14) pouvant être enrobés au moins partiellement par la masse élastomère formant l'enrobage en caoutchouc élastique (12) à partir de ladite au moins une attaque de coulée (14).

13. Corps d'articulation (10) selon l'une des revendications 1 à 12,
**caractérisé en ce qu'**à chaque douille (14) sont associés des éléments formant collet (16) qui sont respectivement prévus aux extrémités axiales des douilles (14) et enrobés au moins partiellement par l'enrobage en caoutchouc élastique (12).

14. Corps d'articulation (10) selon l'une des revendications 1 à 13,
**caractérisé en ce que** l'enrobage en caoutchouc élastique (12) du corps d'articulation (10) présente au moins un évidement (32) sur chacune de ses surfaces s'étendant perpendiculairement à l'axe médian (M) du corps d'articulation (10) dans la zone entre deux douilles (14) adjacentes.

15. Agencement d'arbres, en particulier ligne de transmission d'un véhicule, muni d'un corps d'articulation (10) selon l'une des revendications 1 à 14.
